# EUROPEAN PATENT APPLICATION

(11) **EP 1 298 408 A2**
(43) Date of publication of application: **02.04.2003**
(21) Application number: 02405835.6
(22) Date of filing: 27.09.2002
(51) Int. Cl.: F41H 11/02, G01S 7/38

(54) **Improved direction infrared counter measure**

(30) Priority: 01.10.2001 IL 14573001
(71) Applicant: RAFAEL - ARMAMENT DEVELOPMENT AUTHORITY LTD., HAIFA 31021 (IL)
(72) Inventor: Aharon, Oren, 3102 Haifa (IL); Bar-Avi, Patrick, 3102 Haifa (IL)
(74) Representative: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Abstract**

A system for defeating a threat posed by a guided missile. The system includes a broad band light source (46) with a beam width of less than 4°, a DIRCM control system (28), a missile warning system, and a missile tracking system. The DIRCM control system (28) is configured to aim a beam produced by the light source. The missile warning system is configured to supply the DIRCM control system (28) with a first trajectory of the missile. The missile tracking system is configured to supply the DIRCM control system with a second trajectory of the missile, which is more accurate than the first trajectory.

## Description

### FIELD AND BACKGROUND OF THE INVENTION

The present invention relates to an improved directional infrared counter measure system. and more specifically to a system that effectively defeat infrared guided missile threats, especially to low-flying aircraft.

Since the Second World War, more than 80% of aircraft have been shot down by infrared "heat-seeking" guided missiles. whether surface-launched (SAM) or air-launched (AAM). In addition, second-generation guided anti- anti-tank missiles, such as the TOW, have been proven effective against low-flying aircraft such as helicopters. In an effort to protect the aircraft by neutralizing this threat, the launching of heat-emitting decoys ("flares") has been widely used. Flares have three primary disadvantages. First, all but the most primitive heat-seeking missiles are unaffected by flares. Second, the time required after missile launch detection for flare launch and lighting is relatively long when compared to the total time of a typical aircraft/missile engagement. Third, the number of flares a given platform carries at one time is very limited.

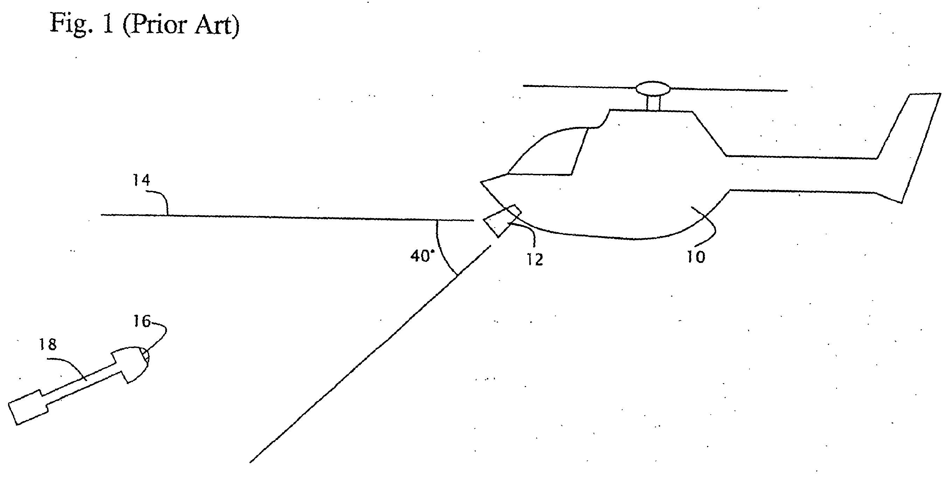

In order to defeat the threat of the infrared missiles, directional infrared counter measures (DIRCM) have been developed. In Figure 1, the use of primitive types of DIRCM, such as the AN/ALQ-204 by Lockheed-Martin (Owego, New York, USA) is depicted. When a threat is anticipated, the operator of the DIRCM in an aircraft **10** activates a lamp **12,** illuminating a broad swathe (roughly 40°) with beam **14** in a direction from which a threat is expected. The illumination of an infrared seeker **16** of a threat **18** by beam **14** causes seeker **16** to be jammed or destroyed, causing threat **18** to miss aircraft **10.** However the energy density of beams such as **14** systems has proven to be ineffective against infrared seekers of newer missiles.

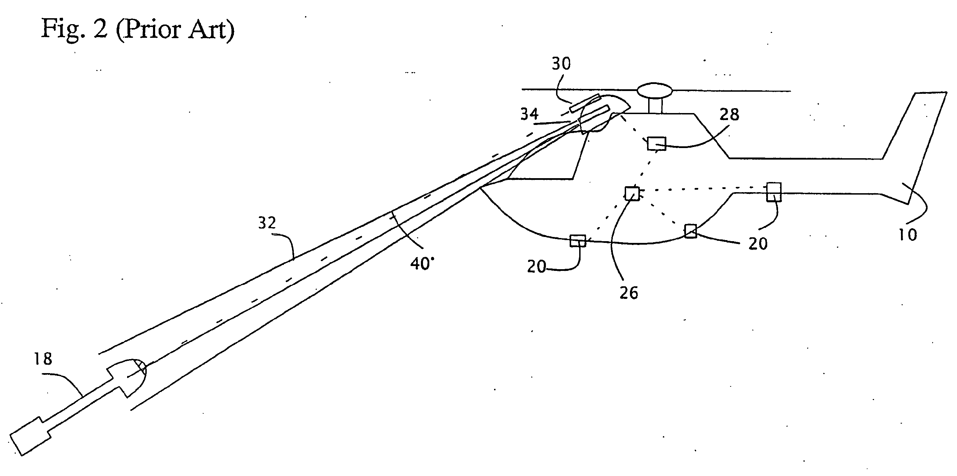

Systems such as the AN/AAQ-24 (V) NEMESIS by Northrop-Grumman Defensive Systems Division (Rolling Meadows, Illinois, USA) are a significant improvement over earlier DIRCM systems. The operation of such a system is depicted in Figure 2. A MWS (Missile Warning System), such as the AAR-54 (V) by Northrop-Grumman ES³ (Baltimore, Maryland, USA), based on a plurality of detectors **20** mounted on aircraft **10** detects a missile launch, tracks the launched missile and identifies it as a threat **18** to aircraft **10.** The control system of the MWS **26** transfers or "hands-off" the trajectory of threat **18** to DIRCM control system **28.** DIRCM control system **28** then uses dedicated tracking system **30** to track threat **18** and directs a light beam **32** (with a width down to about 4°) produced by a gimbaled light source **34** to illuminate threat **18.**

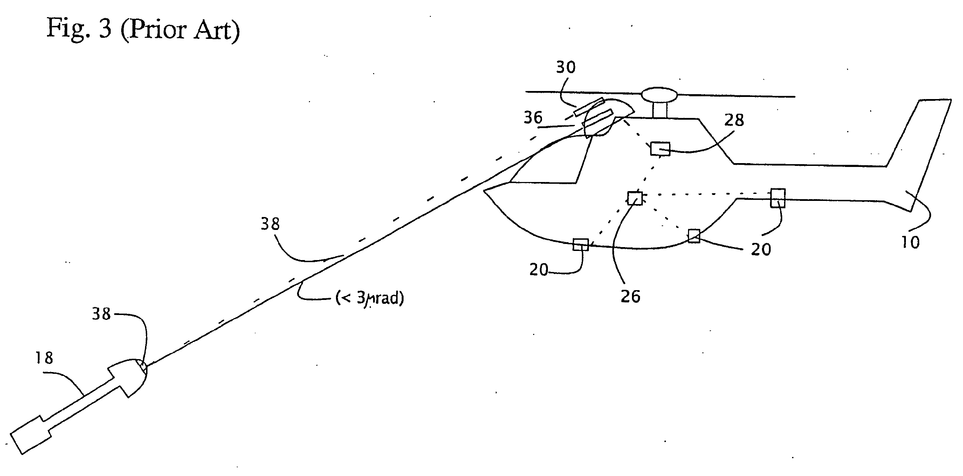

An improved DIRCM system similar to that described above and in Figure 2 replaces light source **34** with a laser. Laser-based DIRCM systems include the AN/AAQ-24 (V) / Viper (NEMESIS) by Northrop Grumman Defensive Systems Division (Rolling Meadows, Illinois, USA) or the AN/ALQ-212 (ATIRCM) by BAE Systems (Nashua, New Hampshire, USA). In such a DIRCM system, depicted in Figure 3, a laser **34** is used to illuminate threat **18.** Due to the narrowness of laser beam **36** produced by laser **34** (less than 3 microradians) dedicated tracking system **30** must be highly accurate, being able to identify and pinpoint the infrared detector **40** of threat **18.** However, the intensity and wavelength selectivity of laser beam **38** allows for a highly effective, albeit expensive and sensitive, DIRCM system. It is important to note that some laser-based DIRCM systems are hybrid systems: a lamp and a coaxial laser are used to illuminate the threat. Although significantly more expensive, such hybrid configurations are often necessary to overcome the likelihood that in real-time engagements the laser cannot be aimed properly for threat neutralization.

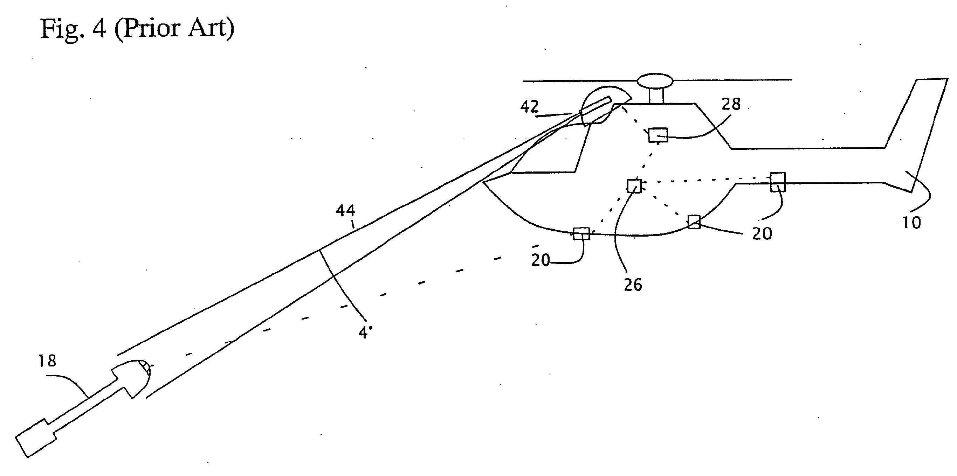

A newer DIRCM system is the EOSDS iElectro-Optical Self-Defense Suite) of Rafael (Israel) which uses a gimbaled wide beam divergence (between 4° and 10°) light source **42** to illuminate threat **18,** Figure 4. Different from the DIRCM systems depicted in Figures 2 and 3, the EOSDS, system, depicted in Figure 4, lacks a dedicated tracking system. Once the MWS control system **26** identifies threat **18,** the threat trajectory calculated by the MWS control system **26** is used to direct gimbaled light source **42** to illuminate threat **18** with beam **44.** The EOSDS system is significantly better than other prior-art systems in that no hand-off time is required. The longer illumination time gained by eliminating the hand-off time as well as the increased chance for accurate illumination gained by width of beam **44** when compared to laser beam **38** compensates for the lesser intensity of beam **44,** allowing for effective threat neutralization. Further, since the reaction time to a detected threat is much lower (less than 100 ms) aircraft survivability is much better.. In addition, the removal of a dedicated tracking system allows for a much less expensive and more robust system.

Despite the effectivity of the EOSDS system, there is a need for a DIRCM system with an improved ability to illuminate a threat yet not relying on expensive and sensitive laser and peripheral equipment.

### SUMMARY OF THE INVENTION

There is provided according to the teachings of the present invention a DIRCM system, useful for defeating a threat posed by a guided missile made up of: (a) a missile warning system (MWS); (b) a DIRCM control system; (c) a broad band light source (e.g. an arc lamp such as a Xenon lamp) with a beam width of less than 4°, preferably less than 2°, more preferably less than 1°, even more preferably less than 0.5°, most preferably less than 0.25° and (d) a missile tracking system dedicated to the DIRCM control system.

There is also provided according to the teachings of the present invention a method for neutralizing the threat posed by a guided missile by (a) detecting the guided missile; (b) detecting the trajectory of the guided missile; and c) illuminating the guided missile with a broad band light source (e.g. an arc lamp such as a Xenon lamp) having a beam width of less than 4°, preferably less than 2°, more preferably less than 1°, even more preferably less than 0.5°, and most preferably less than 0.25°.

There is also provided according to the teachings of the present invention a DIRCM system for defeating a threat posed by a guided missile made up of: a) a missile warning system (MWS); b) a missile tracking system; c) a broad band light source (e.g. an arc lamp such as a Xenon lamp) with a variable beam width; d) a mechanism to vary the width of the beam of the light source; and e) a DIRCM control system configured to receive trajectory data of the missile from the missile warning system and from the missile tracking system.

According to a feature of the present invention, the beam width can be varied to allow a beam width of greater than 1°, preferably greater than 2° and even more preferably greater than 4°.

According to a further feature of the present invention, the beam width can be varied to allow a beam width of less than 1°, preferably less than 0.5° and even more preferably less than 0.25°.

There is also provided according to the teachings of the present invention a method for neutralizing the threat posed by a guided missile by (a) detecting the guided missile; (b) detecting the trajectory of the guided missile with a MWS; c) illuminating the guided missile based on the first trajectory with a light beam from a broad band light source (e.g. an arc lamp such as a Xenon lamp), the light beam having a first beam width; d) substantially concurrently with c, initiating tracking of the missile with a missile tracking system, the missile tracking system configured to determine a second trajectory of the guided missile, the second trajectory being more accurate than the first trajectory (determined by the MWS); and e) illuminating the guided missile based on the second trajectory with a light beam from said broad band light source, said light beam having a second beam width, the second beam width preferably being smaller than the first beam width.

### BRIEF DESCRIPTION OF THE DRAWINGS

The invention is herein described, by way of example only, with reference to the accompanying drawings, where:
FIG. 1 (prior art) is a schematic depiction of a permanently lit wide illumination DIRCM system;
FIG. 2 (prior art) is a schematic depiction of a DIRCM system using a gimbal-mounted lamp and a dedicated tracking system;
FIG. 3 (prior art) is a schematic depiction of a DIRCM system using a gimbal-mounted laser and a dedicated tracking system;
FIG. 4 (prior art) is a schematic depiction of a DIRCM using a gimbal-mounted lamp and the tracking system of the MWS to direct the beam;
FIG. 5 is a schematic illustration of a first embodiment of the DIRCM system of the present invention using a gimbal-mounted narrow beam lamp and a dedicated tracking system; and
FIG. 6 is a schematic illustration of a second embodiment of the DIRCM of the present invention using a gimbal-mounted variable width beam and a dedicated tracking system.

### DESCRIPTION OF THE PREFERRED EMBODIMENTS

The present invention is of a DIRCM that is simpler and more robust than similar DIRCM systems known heretofore, and of a method of its use. The principles and operation of a DIRCM device according to the present invention may be better understood with reference to the drawings and the accompanying description.

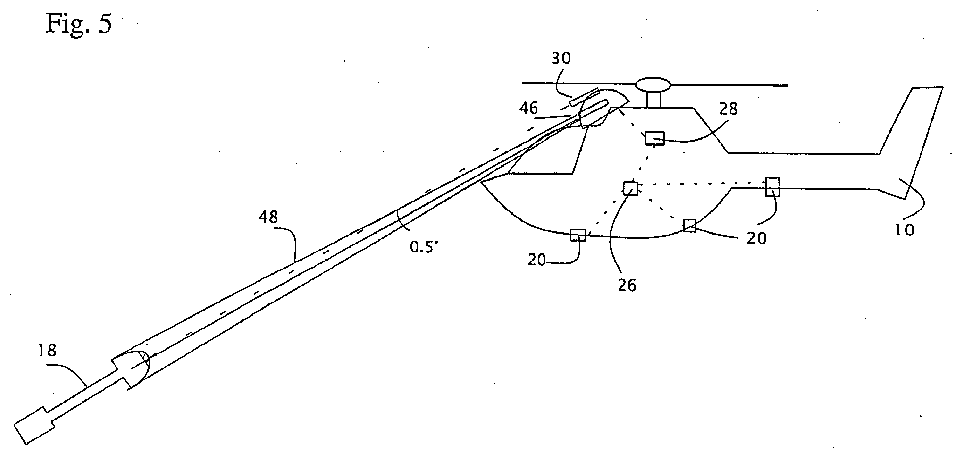

Figure 5 illustrates a first embodiment of the DIRCM system of the present invention. In Figure 5, aircraft **10** is provided with an MWS system including detectors **20** and MWS control system **26.** Further, aircraft **10** is provided with a DIRCM system including DIRCM control system **28**, dedicated tracking system **30,** and narrow beam broad-band light source (e.g. Xenon lamp) **46.** When MWS detectors **20** detect a missile launch, MWS control system **26** evaluates if the launched missile is a threat **18.** If the missile is a threat, MWS control system **26** hands-off the trajectory of threat **18** to DIRCM control system **28,** which aims light source **46** at threat **18** to illuminate threat **18** with narrow light-beam **48.** Dedicated tracking system **30** tracks threat **18** and ensures that threat **18** remains illuminated by beam **48** by directing light source **46,** until threat **18** is no longer a threat to aircraft **10**.

Unlike the prior art DIRCM systems described in Figure 2, beam **48** produced by light source **46** is relatively narrow, being no more than approximately 4°, preferably less than 2°, more preferably less than 1°, even more preferably less than 0.5°, and most preferably less than 0.25°. Dedicated tracking system **30** of Figure 5 needs to aim light beam **46** with a few tenths of a degree width as opposed to a 3 microradian (∼0.005°) wide laser beam **38** of Figure 3. Thus dedicated tracking system **30** in Figure 5 is simple and robust relative to the dedicated tracking system of Figure 3.

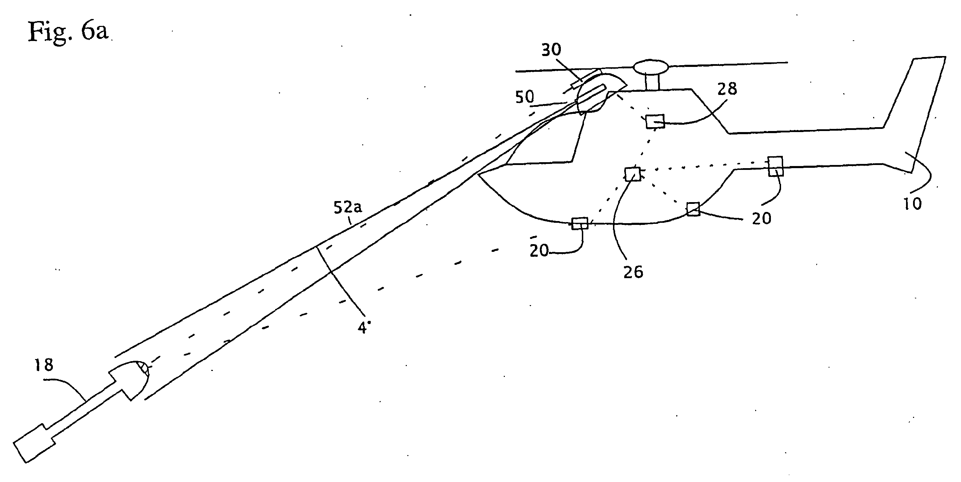

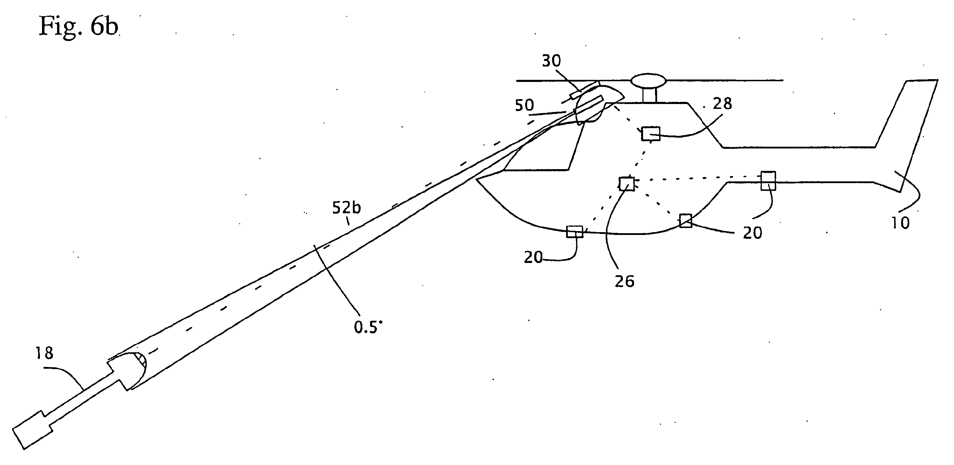

Figures 6A and 6B illustrate a second embodiment of the DIRCM system of the present invention. In Figures 6, aircraft **10** is provided with an MWS system including detectors **20** and MWS control system **26.** Further, aircraft **10** is provided with DIRCM system including DIRCM control system **28,** dedicated tracking system **30,** and variable width beam broad-band light source **50.** When MWS detectors **20** detect a missile launch. MWS control system **26** evaluates if the launched missile is a threat **18.** When threat **18** is detected, DIRCM control system **28** reacts immediately (less than 100 ms), commanding light source **50** to illuminate threat **18** using the threat trajectory found by MWS control system **26,** Figure 6A.. The width of beam **52a** used to illuminate threat **18** is selected such that threat **18** is effectively illuminated despite the relatively inaccurate trajectory detected by MWS control system **26.** Thus, the beam width is relatively broad, e.g. 4° or more. If the accuracy of the threat trajectory found by the MWS is sufficient, the beam width is preferably 2° or greater and more preferably 1° or greater. Just as in the EOSDS system depicted in Figure 4, there is no hand-off delay and threat **18** is engaged.

Simultaneously, with the engagement of threat **18** by beam **52a** MWS control system **26** hands-off the trajectory of threat **18** to DIRCM control system **28** that activates dedicated tracking system **30.** Once dedicated tracking system **30** acquires threat **18,** DIRCM control system **28** causes light source **50** to produce narrower light beam **52b** for example of no more than approximately 1° wide, preferably no more than 0.5° wide and even more preferably less then 0.25°, as depicted in Figure 6b. Since dedicated tracking system **30** can identify the trajectory of threat **18** much more accurately then MWS control system **26,** light beam **52b** is much narrower to increase the energy density illuminating threat **18,** and consequently the neutralization efficiency.

As is clear to one skilled in the art, the width of light beams **52a** and **52b** is related to the accuracy of the trajectories determined by the MWS control system **26** and dedicated tracking system **30,** respectively. For example, if MWS control system **26** is configured to determine a trajectory as accurate as in the system of Figure 4, then the width of light beam **52a** is approximately 4°. If the trajectory determined by dedicated tracking system **30** is sixteen times more accurate, then the width of light beam **52b** is approximately 1°.

The advantages of a DIRCM system such as depicted in Figure 6 and described hereinabove are clear to one skilled in the art. The three most prominent are in speed of engagement, jamming efficiency, and price.

By using the rough trajectory provided by the MWS system, the DIRCM system can engage the threat immediately. This quick engagement is of the utmost importance in short range and high-threat density environments

Immediate engagement coupled with the use of a variable width beam lamp allows increased energy to be concentrated on the threat once the more accurate DIRCM dedicated tracking system acquires the threat, ensuring threat neutralization.

Lastly, reliance on a lamp-based system instead of a laser system allows the system to be much more robust and less expensive.

Although these advantages are important for any target, the advantages make the DIRCM system of the present invention exceptionally suitable for applications such as defense against unexpected attacks by militants on soft (nonmilitary) aircraft.

With minor modifications, the embodiment of the present invention described in Figures 6 can be applied to defense of ground targets. such as armored fighting vehicles (AFVs). Production of a light source, such as a Xenon lamp, with a variable beam width in the order of from about 4 degrees to down about 0.5 degrees is known to one skilled in the art by use, for example, of variable geometry reflectors or variable focal length lenses. Means necessary for making variable beam width lamps are commercially available, for example from Ballantyne of Omaha, Inc., Omaha, Nebraska, USA.

While the invention has been described with respect to a limited number of embodiments, it will be appreciated that many variations, modifications and other applications of the invention may be made. For example, despite the fact that the DIRCM system of the present invention has been described in the context of small military aircraft such as helicopters, it is clear that such a system can be easily modified to protect ground targets, such as AFVs or fixed installations, as described hereinabove. In addition, although described as being useful against infrared guided missiles, with appropriate modification, the DIRCM system of the present invention can be used against threats guided by radiation at different frequencies (e.g. UV/VIS). Similarly, it is clear to one skilled in the art that the system of the present invention can be used to neutralize munitions that are a threat to an entity that is not the platform on which the system of the present invention is deployed.

Thus, it is understood that the specification and examples are illustrative and do not limit the present invention. Other embodiments and variations not described herein understood to be within the scope and spirit of the invention.

## Claims

1. A system for defeating a threat posed by a guided missile comprising:
a) a broad band light source with a beam width of less than 4°;
b) a DIRCM control system, configured to aim a beam produced by said light source;
c) a missile warning system configured to supply said DIRCM control system with a first trajectory of the missile; and
d) a missile tracking system configured to supply said DIRCM control system with a second trajectory of the missile. said second trajectory being more accurate than said first trajectory.

2. The system of claim 1 wherein said light source is an arc lamp.

3. The system of claim 2 wherein said light source is an arc lamp.

4. The system of claim 1 wherein said beam width is less than 2°.

5. The system of claim 4 wherein said beam width is less than 1°.

6. A method for neutralizing the threat posed by a guided missile comprising:
a) detecting the guided missile;
b) detecting a trajectory of the guided missile; and
c) illuminating the guided missile based on said trajectory with a broad band light source having a beam width of less than 4°.

7. The method of claim 6 wherein said light source is an arc lamp.

8. The method of claim 7 wherein said light source is an arc lamp.

9. The method of claim 6 wherein said beam width is less than 2°.

10. The method of claim 9 wherein said beam width is less than 1°.

11. The method of claim 10 wherein said beam width is less than 0.5°.

12. A system for defeating a threat posed by a guided missile comprising:
a) a broad band light source with a variable beam width;
b) a mechanism for varying said beam width of said light source;
c) a DIRCM control system, configured to aim a light beam produced by said light source and further configured to control said mechanism for varying said beam width;
d) a missile warning system configured to supply said DIRCM control system with a first trajectory of the missile; and
e) a missile tracking system configured to supply said DIRCM control system with a second trajectory of the missile, said second trajectory being more accurate than said first trajectory.

13. The method of claim 12 wherein said light source is an arc lamp.

14. The system of claim 13 wherein said light source is an arc lamp.

15. The system of claim 12 wherein said mechanism for varying said beam width is configured to allow a beam width of less than 1°.

16. The system of claim 15 wherein said mechanism for varying said beam width is configured to allow a beam width of less than 0.5°.

17. The system of claim 16 wherein said mechanism for varying said beam width is configured to allow a beam width of less than 0.25°.

18. A method for neutralizing the threat posed by a guided missile comprising:
a) detecting the guided missile;
b) determining a first trajectory of the guided missile
c) illuminating the guided missile based on said first trajectory with a light beam from a broad band light source, said light beam having a first beam width;
d) substantially concurrently with c, initiating tracking of the missile with a missile tracking system, said missile tracking system configured to determine a second trajectory of the guided missile, said second trajectory being more accurate than said first trajectory; and
e) illuminating the guided missile based on said second trajectory with a light beam from said broad band light source, said light beam having a second beam width.

19. The method of claim 18 wherein said light source is an arc lamp.

20. The method of claim 19 wherein said light source is an arc lamp.

21. The method of claim 18 wherein said second beam width is smaller than said first beam width by a factor related to an accuracy of said second trajectory relative to said first trajectory.

22. The method of claim 18 wherein said first trajectory is determined using a missile warning system.
